# EUROPÄISCHE PATENTANMELDUNG

(11) **EP 1 457 517 A1**
(43) Veröffentlichungstag der Anmeldung: **15.09.2004**
(21) Anmeldenummer: 04002509.0
(22) Anmeldetag: 05.02.2004
(51) Int. Cl.: C08J 9/00, E04D 11/00

(54) **Extrudierte Polystyrolschaumplatten mit Rillen zur Entwässerung und/oder zum Wasserdampfpartialdruckausgleich**

(30) Priorität: 14.03.2003 DE 10311608
(71) Anmelder: BASF AKTIENGESELLSCHAFT, 67056 Ludwigshafen (DE)
(72) Erfinder: Schäfer, Lutz, 64625 Bensheim (DE); Boy, Elmar, 67433 Neustadt (DE)

(57) **Zusammenfassung**

Eine extrudierte Polystyrolschaumplatte mit Rillen zur Entwässerung und/oder zum Wasserdampfpartialausgleich sowie die Verwendung in Dachkonstruktionen, insbesondere in Umkehrdachkonstruktionen.

## Beschreibung

Die Erfindung betrifft eine extrudierte Polystyrolschaumplatte mit Rillen zur Entwässerung und/oder Wasserdampfpartialdruckausgleich sowie die Verwendung in Dachkonstruktionen, insbesondere in Umkehrdachkonstruktionen.

Dämmplatten mit Entwässerungsrillen sind bekannt und werden z. B. im Bereich der außenseitigen Kellerwanddämmung oder bei der Steildachdämmung zur Verbesserung der Mörtelhaftung bei direkt auf den Dämmplatten verlegten Ziegeln eingesetzt (z. b. DE 201 12 604 U1 oder DE 43 17 877).

Die DE 101 41 005 beschreibt ein Verfahren zur Nachbehandlung von extrudierten Polystyrol-Schaumstoffplatten, bei der an mindestens einer Plattenoberfläche dünne, senkrechte Kanäle angebracht wurden, um die Lagerzeit Platten, die CO₂ und/oder Fluorkohlenwasserstoff als Treibmittel enthalten, zu verkürzen.

In der Umkehrdachkonstruktion wird die Dachabdichtung unterhalb der Dämmschicht, auf der festen, tragenden Dachkonstruktion angeordnet Dies hat den Vorteil, dass durch den über der Dachabdichtung liegenden Dämmstoff die wichtigste Funktionsschicht des Daches, die "Abdichtung" sowohl vor mechanischen Einwirkungen geschützt ist, als auch in sehr viel geringerem Maße durch die Temperaturschwankungen zwischen Tag und Nacht, sowie zwischen Sommer und Winter thermisch beansprucht wird.

Der Nachteil der Umkehrdachkonstruktion ist, dass Regenwasser aus Niederschlägen auch unter die Dämmplatten gelangt und beim Abfließen dem System Wärme entzieht wodurch die Dämmwirkung der Gesamtkonstruktion verringert wird.

Die Dämmstofflage muss bei der Umkehrdachkonstruktion oberseitig durch eine Schutzschicht vor dauerhafter UV-Bestrahlung, vor Windsog und vor Flugfeuer und strahlender Wärme geschützt werden. Hierfür kommen je nach Nutzung des Daches Kiesabdeckungen (für ungenutzte Dächer), Betonplatten (für begehbare Terrassendächer), Pflanzsubstrate (für Gründächer), oder spezielle Aufbauten mit Fahrbelägen zum Beispiel aus Verbundpflastersteinen, großformatigen aufgeständerten Betonplatten oder Ortbetonplatten (für Parkdächer) in Frage.

Für die Dämmschicht sind in Umkehrdachkonstruktionen nur extrudierte Polystyrolplatten (XPS), sowie einige spezielle Schaumplatten aus expandierbarem Polystyrol (EPS) bauaufsichtlich zugelassen.

Zur Sicherstellung der langzeitigen Funktionsfähigkeit dürfen die Dämmplatten in der Umkehrdachkonstruktion an der Oberseite nicht mit wasserdampfdiffusionssperrenden Schichten bedeckt werden. Infolge der großen Wasserdampfpartialdruckunterschiede zwischen der Dämmplattenunterseite und der Außenumgebung wird Wasserdampf durch die Dämmplatten transportiert.

Wird dieser Wasserdampf an der kalten Dämmplattenseite (oben) am Austritt behindert, bildet sich innerhalb der Platten Tauwasser. Die Platten durchfeuchten und verringern dadurch ihre Dämmfähigkeit.

Besonders bei Umkehrdachaufbauten für Parkdächer mit Verbundsteinpflasterfahrbelägen hat sich in der Praxis gezeigt, dass die Bettungsschichten, die eine bessere Lagestabilität für die Pflastersteine ergeben bei Niederschlägen Wasser an der Oberseite der Dämmplatten nur unzureichend ableiten. In die Konstruktion eingedrungenes Wasser, das in den über den Dämmplatten angeordneten Funktionsschichten nicht ausreichend abfliesen kann, bildet beim Befahren, durch die Elastizität der Gesamtkonstruktion, einen Wasserdruck aus, der zur Austragung des Fugenfüllsandes zwischen den einzelnen Verbundpflastersteinen führen kann.

Ohne Fugensand verliert der Pflasterfahrbelag seine Verbundwirkung und damit seine Tragfähigkeit. Dies kann zur Zerstörung der gesamten Konstruktion führen, mit starker Schädigung der Dämmplatten.

Aufgabe der Erfindung war daher, eine extrudierte Polystyrolschaumstoffplatte bereitzustellen, die den vorgenannten Nachteilen abhilft und insbesondere für die Verwendung in Umkehrdachkonstruktionen geeignet ist.

Demgemäss wurde eine extrudierte Polystyrolschaumplatte mit Rillen zur Entwässerung und/oder zum Wasserdampfpartialdruckausgleich gefunden.

Bevorzugt weisen die extrudierten Polystyrolschaumplatten Rillen an einer der Oberflächen auf. Die Ausbildung und Geometrie der Entwässerungs- und/oder Wasserdampfentspannungsrillen wird bevorzugt den speziellen Anforderungen bei druckbelasteten Parkdachkonstruktionen angepasst. Dabei wird ein Optimum zwischen den Funktionen Wasserableitung und Lastaufnahme eingestellt. Im allgemeinen beträgt die Tiefe der Rillen 1 bis 30 %, bevorzugt 5 bis 10% der Plattendicke.

In der Regel weist die extrudierte Polystyrolplatte 5 bis 50 Entwässerungsrillen pro 100 cm² der Plattenoberfläche, bevorzugt in etwa paralleler Anordnung auf. Die Rillen können in einer Richtung oder auch über Kreutz verlaufen.

In der Regel ist eine Weite der Rillen an der Plattenoberfläche von 0,3 bis 10 mm, bevorzugt 2 bis 5 mm ausreichend.

Die Entwässerungsrillen oder Wasserdampf-entspannungsrillen können durch mechanisches Ausfräsen oder durch thermisches Einprägen hergestellt werden. Sie dienen der schnellen Wasserableitung aus dem oberhalb der XPS-Platten befindlichen Dachaufbau bei Niederschlag oder dem Ausgleich des Waserdampfpartialdruckes.

Durch Verwendung der erfindungsgemäßen Rillenplatten wird das Wasser abgeleitet und das Zerstörungsrisiko minimiert.

Bei Parkdachkonstruktionen mit Ortbeton-Fahrbelag sind die Dämmplatten an der Oberseite durch eine Trennlage zwischen Dämmschicht und Betonplatte und auch durch die Betonplatte selbst diffusionssperrend abgedeckt. Die langzeitige Funktionsfähigkeit ist bei dieser Konstruktion nur sichergestellt, wenn das gesamte Niederschlagswasser oberflächig auf der Ortbetonplatte abgeführt wird.

Da die Ortbetonplatten flächenmäßig begrenzt in Teilflächen von zum Beispiel 2,5 m x 2,5 m bis 5 m x 5 m hergestellt werden müssen und zwischen den Teilflächen Fugen bestehen, durch die Niederschlagswasser in die Konstruktion und unter die Dämmplatten gelangen kann, müssen die Fugen dauerelastisch ausgefüllt werden. Werden diese Fugen undicht, gelangt Wasser unter die Dämmplatten. Damit beginnt der Wasserdampfdiffusionstransport durch die Dämmplatten. Wegen der diffusionssperrenden Wirkung der Betonplatten können die Dämmplatten dann im Laufe der Zeit durchfeuchten, wodurch ihre Dämmleistung vermindert wird.

Bei Verwendung der erfindungsgemäßen Rillenplatten wird der Wasserdampfdiffusionsstrom am Austritt nicht behindert, die Dämmplatten durchfeuchten nicht und behalten ihre Dämmfähigkeit dauerhaft.

Durch Ausbildung von Entwässerungsrillen oder Wasserdampf-Entspannungsrillen an der Oberseite von Dämmplatten können Umkehrdachkonstruktionen, die als

Parkdächer mit Verbundsteinpflaster-Fahrbelag ausgeführt werden und auch Parkdachkonstruktionen mit Ortbeton-Fahrbelag funktionssicherer und langlebiger ausgeführt werden.

Im Falle der Ortbetonplatten dienen sie dem Austritt und Abtransport des Tauwassers, das aus dem durch die Dämmplatten transportierten Wasserdampfdiffusionsstrom in den Entwässerungsrillen oder Wasserdampf-Entspannungsrillen kondensiert. Sie verhindern damit die Wasseranreicherung in den Dämmplatten, wodurch die Dämmleistung dauerhaft erhalten bleibt.

Besonders vorteilhaft können die erfindungsgemäßen Rillenplatten bei Umkehrdächern mit mehreren Dämmschichtlagen, bevorzugt mit mindestens zwei Schichten aus extrudierten Polystyrolschaumplatten, eingesetzt werden.

## Patentansprüche

1. Extrudierte Polystyrolschaumplatte mit Rillen zur Entwässerung und/oder zum Wasserdampfpartialdruckausgleich.

2. Extrudierte Polystyrolschaumplatte nach Anspruch 1, **dadurch gekennzeichnet, dass** die Rillen so ausgebildet sind, dass die Wasserabfuhr gewährleisten und die Lastaufnahme bei Belastung der Platte ausreichend ist.

3. Extrudierte Polystyrolschaumplatte nach Anspruch 1 oder 2, **dadurch gekennzeichnet, dass** die Tiefe der Rillen 1 bis 30 % der Plattendicke beträgt.

4. Extrudierte Polystyrolschaumplatte nach einem der Ansprüche 1 bis 3, **dadurch gekennzeichnet, dass** die Rillen an einer der Plattenoberflächen angebracht sind.

5. Extrudierte Polystyrolschaumplatte nach einem der Ansprüche 1 bis 4, **dadurch gekennzeichnet, dass** sie 5 bis 50 Rillen pro 100 cm² der Plattenoberfläche in paralleler Anordnung aufweist.

6. Extrudierte Polystyrolschaumplatte nach einem der Ansprüche 1 bis 5, **dadurch gekennzeichnet, dass** die Weite der Rillen an der Plattenoberfläche 0,3 bis 10 mm beträgt.

7. Umkehrdach mit mindestens einer Schicht aus extrudierten Polystyrolschaumplatten mit Rillen zur Entwässerung und/oder zum Wasserdampfpartialdruckausgleich nach einem der Ansprüche 1 bis 5.

8. Umkehrdach mit Verbundsteinpflaster oder Ortbetonbelag, **dadurch gekennzeichnet, dass** es als Umkehrdach nach Anspruch 6 mit zwei Schichten aus extrudierten Polystyrolschaumplatten ausgeführt ist.

9. Verfahren zur Herstellung von extrudierten Polystyrolschaumplatten mit Rillen zur Entwässerung und/oder zum Wasserdampfpartialdruckausgleich durch mechanisches Ausfräsen oder durch thermisches Einprägen.
